Europäisches Patentamt

European Patent Office

Office européen des brevets

(11) Publication number: **0 099 344**
**A2**

## EUROPEAN PATENT APPLICATION

(21) Application number: 83830145.5

(51) Int. Cl.³: **B 23 B 51/06**

(22) Date of filing: 15.07.83

(30) Priority: 16.07.82 IT 6791282

(43) Date of publication of application:
25.01.84 Bulletin 84/4

(84) Designated Contracting States:
AT BE CH DE FR GB LI LU NL SE

(71) Applicant: OFFICINE DI CERES - UTENSILERIE RIUNITE S.p.A.
Via Torino 202
I-10074 Lanzo Torinese Torino(IT)

(72) Inventor: Rodes, Giovanni
Via Vignassa 3
I-10070 Procaria Torino(IT)

(74) Representative: Buzzi, Franco et al,
c/o Jacobacci-Casetta & Perani S.p.A. Via Alfieri, 17
I-10121 Torino(IT)

(54) Twist drill.

(57) A twist drill (10) having a body (12) with helical lateral cutting edges (15) and end cutting edges (18) located at a working end (18) of the body (10) has ducts (26) opening into this working end (18) for supplying a lubricating and cooling fluid. Each duct (26) is defined by a helical groove (32) formed in the back (15a) of a respective lateral cutting edge (15) and by a cover strip (34) for the groove (32).

EP 0 099 344 A2

./...

FIG. 1

## Twist Drill

### Field of the invention

The present invention relates generally to twist drills of the type comprising an elongate body with a shank at one end and lateral helical cutting edges and end cutting edges located at a working end of the body opposite the shank.

More particularly, the invention relates to twist drills of the type in which the body has ducts communicating with an axial passage in the shank and opening at the working end. These ducts are used for supplying a lubricating and cooling fluid to the working zone of the drill in order to achieve greater speeds of cutting and advance and a longer working life of the cutting edges of the drill.

### State of the prior art

In a known drill of the type defined above, the supply ducts for the lubricating and cooling fluid are constituted by passages within the body, which are preformed in the steel bar from which the drill is subsequently made.

This solution is relatively complicated and uneconomical to carry out, particularly in the case of drills of considerable size.

It has also been proposed to provide the lubricating and cooling fluid supply ducts on the outside of the body by attaching small copper tubes behind the lateral cutting edges.

This solution is also unsatisfactory because of the risk of damage to the copper tubes by the material removed during working. Moreover, the small copper tubes must be fixed to the body of the drill by high temperature brazing which has the disadvantage of altering the characteristics of the steel from which the drill is made.

## Object of the invention

The object of the present invention is to avoid the disadvantages mentioned above and to provide a twist drill of the type defined at the beginning, in which the ducts for the forced supply of lubricating and cooling fluid can be formed relatively simply and economically, even in drills of considerable size, while avoiding on the one hand any risk of alteration of the material constituting the drill during their formation, and on the other hand any problem of wear or failure of the ducts themselves during use of the drill.

## The invention

According to the present invention, this object is achieved by means of a twist drill of the type mentioned at the beginning, characterised in that each of the ducts for supplying lubricating and cooling fluid is defined by a helical groove formed in the back of a respective lateral cutting edge of the drill and by a cover strip for the groove.

According to the invention, the cover strip is recessed relative to the surface of the back of the lateral cutting edge.

According to one embodiment of the invention, the cover strip is attached to the body by a positive coupling. In this case, two facing cavities are formed in the sides of the helical groove and the longitudinal edges of the cover strip are engaged therein.

According to a variant of the invention, the sides of the helical groove have longitudinal steps close to their edges on which the cover strip bears and to which it is anchored. In this case, the anchoring of the cover strip to the steps is preferably achieved by glueing.

## Brief description of the drawings

The invention will now be described in detail with reference to the appended drawings, provided purely by way of non-limiting example, in which:

Figure 1 is a perspective view of a piercing twist drill according to the invention;

Figure 2 is a cross-section taken on the line II-II of Figure 1;

Figure 3 is a longitudinal.section of the drill;

Figure 4 is a sectional view on an enlarged scale taken on the line IV-IV of Figure 1, and

Figure 5 illustrates a variant of Figure 2.

## Detailed description of the invention

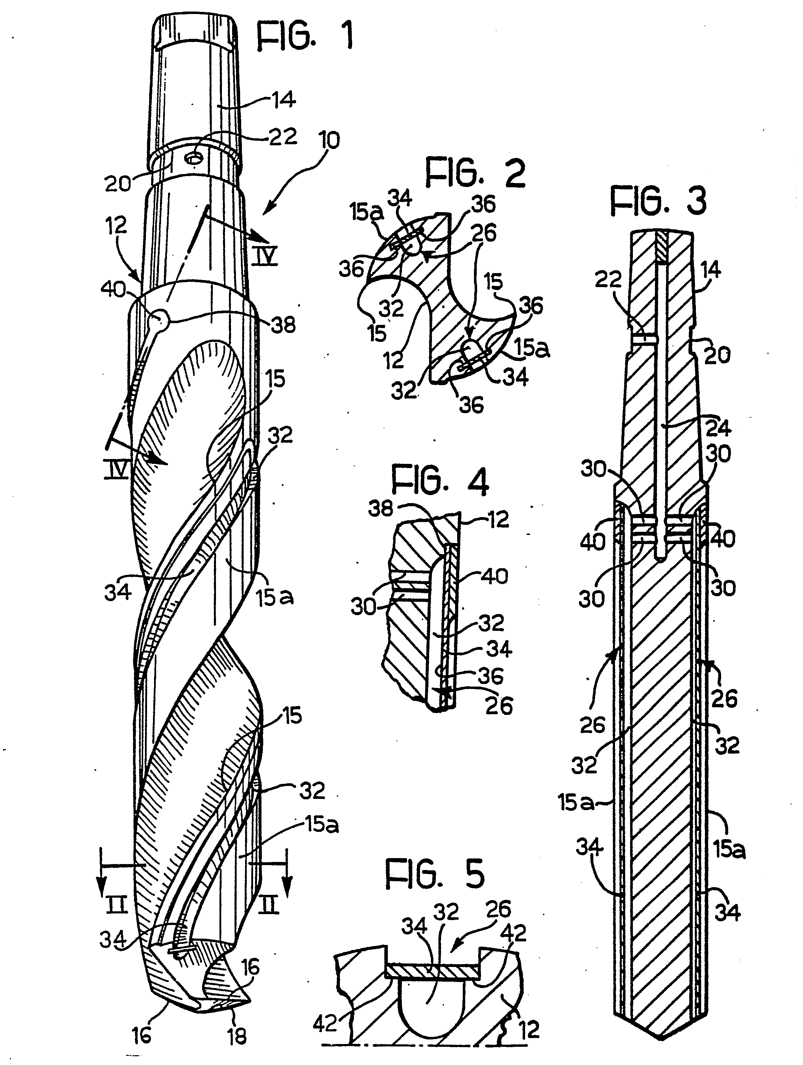

Referring initially to Figure 1, a twist drill according to the invention, generally indicated 10, has an elongate steel body 12 with a tapered Morse-type shank 14 for attachment to a chuck. The working part of the body 12 has lateral helical cutting edges 15 and end cutting edges 16 located at a conoidal end 18 of the body 12 opposite the shank 14.

- 4 -

An annular groove 20 is made in the shank 14 in which a radial hole 22 is formed for the inlet of a lubricating and cooling fluid. When the shank 10 is engaged in the chuck, the groove 20 is located in correspondence with a supply manifold, not illustrated, for a pressurised lubricating and cooling liquid.

The radial hole 22 opens into an internal axial passage 24 formed in the shank 14 and communicating, at its end near the conoidal end 18, with the inlet ends of a pair of helical ducts 26 which terminate at the conoidal end 18. In the example illustrated, the communication between the axial passage 24 and the inlet ends of each duct 26 is achieved by means of respective pairs of internal radial passages 30 formed at the base of the shank 14.

Each of the ducts 26 is formed by a helical groove 32 formed in the back 15a of a respective lateral cutting edge 15, and a cover strip 34 is attached to the sides of the groove 32 in a position which is recessed relative to the surface of the back 15a of the lateral cutting edge 15.

Each cover strip 34 is preferably of steel and, according to the embodiment illustrated in Figures 1 to 4, is attached to the body 12 by means of a positive coupling. In effect, as is best seen in Figure 2, the longitudinal edges of each strip 34 are inserted in corresponding facing cavities 36 formed in the sides of the respective longitudinal groove 32 at a certain distance from the back surface 15a. In order to ensure firm anchorage of the two strips 34 in the body 12, the ends thereof opposite the conoidal end 18 are fixed by brazing to the corresponding ends of the

- 5 -

grooves 32. These ends of the grooves 32 in fact have respective enlarged portions 38 which are filled by brazing material 40.

The fixing of the two strips 34 could be achieved in a different manner from that described above, for example, by the manner illustrated in the variant of Figure 5. According to this variant, the sides of the two helical grooves 32 have, at a certain distance from their respective edges, longitudinal steps 42 defining bearing and anchoring surfaces for the cover strips 34. In this case, the anchoring is preferably achieved by glueing.

Although the invention has been described with reference to a twist drill, it is clear that it can also be applied to tools of a different type, particularly hole-enlarging tools.

CLAIMS

1. Twist drill of the type comprising an elongate body having a shank at one end and lateral helical cutting edges and end cutting edges at a working end opposite the shank, and in which the body has ducts communicating with an axial passage in the shank and opening at the working end of the body to supply a lubricating and cooling fluid, characterised in that each duct (26) is defined by a helical groove (32) formed in the back (15a) of a respective lateral cutting edge (15), and by a cover strip (34) for the groove (32).

2. Drill according to Claim 1 characterised in that the cover strip (34) is recessed relative to the surface of the back (15a) of the lateral cutting edge (15).

3. Drill according to Claim 1 or Claim 2, characterised in that the cover strip (34) is attached to the body (12) by a positive coupling.

4. Drill according to Claim 3, characterised in that the sides of the helical groove (32) are formed with two facing cavities (36) in which the longitudinal edges of the cover strip (34) are engaged.

5. Drill according to Claim 3 or Claim 4, characterised in that the cover strip (34) is rigidly attached to the body (12) at the end of the helical groove (32) opposite the working end (18) of the body (12).

6. Drill according to Claim 5, characterised in that the end of the helical groove (32) opposite the working end (18) of the body (12) has an enlarged end portion (38) which receives a filling of brazing material (40) by means of which the cover strip (34) is rigidly fixed to the body (12).

7. Drill according to Claim 1 or Claim 2, characterised in that the sides of the helical groove (32) have longitudinal steps (42) on which the cover strip (34) bears and to which it is anchored.

8. Drill according to Claim 7, characterised in that the cover strip (34) is anchored to the steps (42) by glueing.

9. Drill according to any one of the preceding claims, characterised in that the helical groove (32) communicates with the axial passage (24) in the shank (14) through at least one radial passage (30) in the body (12).

0099344

1/1

FIG. 1
FIG. 2
FIG. 3
FIG. 4
FIG. 5